# EUROPÄISCHE PATENTSCHRIFT

(11) **EP 3 198 967 B1**
(45) Veröffentlichungstag und Bekanntmachung des Hinweises auf die Patenterteilung: **18.09.2019**
(21) Anmeldenummer: 14781098.0
(22) Anmeldetag: 23.09.2014
(51) Int. Cl.: G08C 19/00, H04B 1/40, H04W 84/12, H04W 88/10

(54) **FUNK-BASISSTATION UND SYSTEM MIT BESAGTER FUNK-BASISSTATION**
RADIO BASE STATION AND SYSTEM HAVING SAID RADIO BASE STATION
STATION DE RADIOCOMMUNICATION DE BASE ET SYSTÈME AVEC LADITE STATION DE RADIOCOMMUNICATION DE BASE

(43) Veröffentlichungstag der Anmeldung: 02.08.2017
(73) Patentinhaber: SES-imagotag GmbH, 8072 Fernitz-Mellach (AT)
(72) Erfinder: RÖSSL, Andreas, 8072 Fernitz-Mellach (AT)
(74) Vertreter: Schneider, Michael
(86) Internationale Anmeldenummer: PCT/EP2014/070245
(87) Internationale Veröffentlichungsnummer: WO 2016/045707

(56) Entgegenhaltungen:
- EP-A2- 1 798 631
- WO-A1-2009/009658
- US-A1- 2010 065 634
- US-A1- 2010 267 339
- US-A1- 2014 086 156
- "IEEE recommended practice for information technology - telecommunications and information exchange between systems - local and metropolitan area networks - specific requirements part 15.2: coexistence of wireless personal area networks with other wireless devices operating in unlicensed frequency ba", IEEE STANDARD; [IEEE STANDARD], IEEE, PISCATAWAY, NJ, USA, 1. Januar 2003 (2003-01-01), Seiten _1-115, XP017601963, ISBN: 978-0-7381-3703-2

## Beschreibung

### TECHNISCHES FELD

Die Erfindung betrifft eine Funk-Basisstation.

Die Erfindung betrifft weiterhin ein System mit besagter Funk-Basisstation.

### HINTERGRUND

Ein bekanntes Kommunikationssystem weist beispielsweise zwei Funk-Accesspoints (Funk-Basisstationen) zur funkbasierten Kommunikation mit je einer Gruppe von Funk-Kommunikationsgeräten auf. Die beiden Accesspoints verwenden für ihre Funkkommunikation das 2,4 GHz-Band, sodass bei der Kommunikation zwischen einem der Accesspoints und den ihm zugeordneten Funk-Kommunikationsgeräten Störungen auftreten können, die durch den anderen Accesspoint und seine Kommunikation mit den ihm zugeordneten Funk-Kommunikationsgeräten verursacht sind.

Das bekannte System ist somit störungsanfällig. Zudem verursacht das bekannte System hohe Investitionskosten, weil für unterschiedliche Gruppen von Funk-Kommunikationsgeräten jeweils eine Accesspoint nötig ist.

Die US 2010/0065634 A1 offenbart ein elektronisches Preisanzeigeschild-System. Die US 2010/0267339 A1 offenbart ein kabelloses Übertagungs-Empfangs-Gerät mit zwei separaten Kabellos-Modulen, wobei das erste Modul das zweite Modul mit einem Indikator-Signal zum Anhaltend des Sendens oder Empfanges veranlassen kann. Die US 2014/0086156 A1 offenbart einen Access-Point mit mehreren Funkeinheiten, die den gleichen oder überlappenden Kanälen arbeiten. Wenn beide Funkeinheiten konkurrierend übertragen möchten, selektiert ein Sperrschaltkreis eine der beiden Funkeinheiten und deaktiviert die andere Funkeinheit. Zudem offenbart die WO 2009/009658 A1 einen kabellosen Dual-Signal-Transceiver, bei dem eine erste Transceiver-Einheit zum deaktivieren einer zweiten Transceiver-Einheit mit Hilfe eines "Shutdown-Signals" ausgebildet ist.

Die Erfindung hat sich die Aufgabe gestellt, ein System bereitzustellen, sodass die eingangs erörterten Probleme vermieden sind.

### ZUSAMMENFASSUNG DER ERFINDUNG

Diese Aufgabe wird durch eine Funk-Basisstation gemäß Anspruch 1 gelöst. Der Gegenstand der Erfindung ist daher eine Funk-Basisstation, aufweisend ein erstes Funkmodul zur Funk-Kommunikation mit ihm zugeordneten ersten Funk-Kommunikationsgeräten, und ein zweites Funkmodul zur Funk-Kommunikation mit ihm zugeordneten zweiten Funk-Kommunikationsgeräten, wobei die beiden Funkmodule eine Kopplung miteinander aufweisen, und das zweite Funkmodul mit Hilfe der Kopplung zum Beeinflussen der Funkaktivität des ersten Funkmoduls ausgebildet ist und das erste Funkmodul hinsichtlich seiner Funkaktivität beeinflussbar ausgebildet ist, wobei das zweite Funkmodul zum Kommunizieren mit elektronischen Preisanzeigeschildern als die ihm zugeordneten zweiten Funk-Kommunikationsgeräte ausgebildet ist, und wobei bei der Kommunikation des zweiten Funkmoduls mit den elektronischen Preisanzeigeschildern ein Zeitschlitzkommunikationsverfahren zur Anwendung kommt, bei dem in sich wiederholender Folge eine Anzahl von Zeitschlitzen mit identischer Zeitschlitzdauer pro Zeitschlitzzyklus zur Kommunikation bereitstehen, wobei jeder Zeitschlitz durch ein eindeutiges Zeitschlitzsymbol gekennzeichnet ist, und wobei das zweite Funkmodul immer zu Beginn jeder Zeitschlitzdauer ein Synchronisationsdatensignal aufweisend das jeweilige Zeitschlitzsymbol sendet, damit das dem betreffenden Zeitschlitz zugeordnete Preisanzeigeschild das Zeitschlitzsymbol während einer Empfangszeitdauer, während der das zugeordnete Preisanzeigeschild seinen Schlafzustand verlassen hat und sich in seinem empfangsbereiten Aktivzustand befindet, zum Feststellen seines synchronen Zustands empfangen kann, wobei die Funkaktivität des ersten Funkmoduls immer dann mittels der Kopplung derart beeinflusst wird, dass während einer Stummschaltzeitspanne, während der das Synchronisationsdatensignal auftritt, das erste Funkmodul stummgeschaltet ist, wobei die Stummschaltzeitspanne mit einer Vorlaufzeit und einer Nachlaufzeit die Empfangszeitdauer überlappt.

Der Aufgabe wird weiterhin durch ein System aufweisend eine erfindungsgemäße Funk-Basisstation und einem mit der Funk-Basisstation gekoppelten Server zur Bereitstellung oder Verarbeitung von Daten betreffend die Kommunikation mit den Funk-Kommunikationsgeräten gelöst.

Mit den erfindungsgemäßen Maßnahmen geht einerseits der Vorteil einher, dass durch die Zusammenlegung bzw. Gruppierung der Funkmodule in der erfindungsgemäßen Funk-Basisstation nur mehr eine einzige gemeinsame elektrische bzw. elektronische Komponentengruppe (Stromversorgung, Computermodul, elektrische und mechanische Anschlüsse, usw..) nötig ist. Demgegenüber wäre im Stand der Technik für jede Funk-Basisstation eine separate Komponentengruppe nötig. Gleiches gilt im übertragenen Sinne auch für die zum Aufbau eines Kommunikationsnetzwerks mit einem Server nötigen Systemkomponenten, wie z.B. LAN-Kabel, Router und Switches usw.. Es lässt sich somit eine erheblich günstigere Infrastruktur realisieren, als dies im Stand der Technik der Fall ist.

Aufbauend auf der nun vorliegenden Koexistenz der Funkmodule lässt sich jedoch auch ein weiterer Vorteil schöpfen, der sich durch die Kopplung der Funkmodule miteinander und ihre Kommunikationsfähigkeit untereinander zwecks Beeinflussung der Funkaktivität ergibt. Durch die Einflussnahme auf die Funkaktivität des anderen Funkmoduls können gegenseitige Störungen bei der Funkkommunikation zuverlässig vermieden werden.

Gemäß einem allgemeinen Aspekt der Erfindung kann jedes der Funkmodule über ein anderes Funkmodul Priorität erlangen und somit in seinem Funknetzwerk störungsfrei kommunizieren. Dabei kann der Zufall entscheiden, und jenes Funkmodul, das zuerst das andere Beeinflusst, erhält Priorität über das andere, bis dieser Zustand nicht mehr benötigt wird. Gemäß einem speziellen Aspekt der Erfindung - worauf nachfolgend noch im Detail eingegangen wird - kann es jedoch von Vorteil sein, wenn nur eines der FunkModule zum Beeinflussen ausgebildet ist und nur das andere Funkmodul beeinflussbar ausgebildet ist. Folglich kann nur das zum Beeinflussen ausgebildete Funkmodul Priorität gegenüber dem anderen Funkmodule erlangen. Dies ist dann von Vorteil, wenn in dem durch die beiden Funkmodule realisierten Gesamtfunknetz das mit Hilfe des zum Beeinflussen ausgebildeten Funkmoduls realisierte Funknetz gegenüber dem andern Funknetz immer zu priorisieren ist. Diese Dominanz des einen Funknetzes gegenüber dem anderen Funknetz kann durch die Art und Weise des Einsatzszenario bzw. der Anwendung und / oder die Art der eingesetzten Funkmodule sowie Funk-Kommunikationsgeräte nötig sein.

In einer erfindungsgemäßen Funk-Basisstation können zwei oder auch drei, vier oder noch mehr Funkmodule integriert bzw. zusammengefasst sein. Die Funkmodule können alle gemäß einem einzigen Funk-Standard oder unterschiedlicher Funk-Standards bzw. Funk-kommunikations-Protokolle betrieben werden. Es können auch proprietäre Protokolle implementiert sein. Ebenso können auch gemischte Systeme mit standardisierten und proprietären Funk-Protokollen realisiert sein.

Funk-Kommunikationsgeräte können bzw. werden zur Vorbereitung auf eine Nutzdatenkommunikation zunächst bei dem jeweiligen Funkmodul angemeldet und sind danach dem jeweiligen Funkmodul zugeordnet. Somit kann jedes der Funkmodul zusammen mit den ihm zugeordneten Funk-Kommunikationsgeräten ein individuelles Funk-Netzwerk bilden. Die Funk-Kommunikation der individuellen Funkmodule kann z.B. über das frei verfügbare 2,4GHz Band oder über ein anderes frei verfügbares Funk-Band erfolgen.

Der Zeitpunkt der Beeinflussung kann frei wählbar oder definiert durch Parameter des jeweils zur Anwendung kommenden Funkprotokolls sein. Auch der Zeitpunkt der tatsächlichen Reaktion auf die Beeinflussung auf der Seite des beeinflussten Funkmoduls, also das Eintreten der beeinflussten Funkaktivität, kann dieser Systematik des zeitlichen Verhaltens entsprechen. Zudem kann die Zeitdauer der beeinflussten (angepassten) Funkaktivität frei wählbar bzw. durch das beeinflussende Funkmodul determiniert oder durch das beeinflusste Funkmodul vorgegeben sein oder sich aus einem oder mehrerer Parametern des zur Anwendung kommenden Funkprotokolle ableiten. Besonders bevorzugt wird der Zeitpunkt sowie die Zeitdauer durch einen Parameter des bei dem beeinflussenden Funkmodul zur Anwendung kommenden Funkprotokolls bestimmt sein, weil damit die besonderen Ausprägungen der Kommunikation des beeinflussenden Funkmoduls optimal berücksichtigt werden.

Weitere, besonders vorteilhafte Ausgestaltungen und Weiterbildungen der Erfindung ergeben sich aus den abhängigen Ansprüchen sowie der nachfolgenden Beschreibung.

Gemäß einem weiteren Aspekt der Erfindung ist das beeinflussende Funkmodul zum Generieren und Abgeben eines Funkaktivität-Steuersignals an das beinflussbare Funkmodul und das beeinflussbare Funkmodul zum Empfangen und Auswerten des Funkaktivität-Steuersignals hinsichtlich seines Informationsgehalts und zum Beeinflussen seiner Funkaktivität gemäß dem Informationsgehalt ausgebildet. Die jeweilige Generatorstufe (im zum beeinflussen ausgebildeten Funkmodul) zum Generieren und Abgeben des Funkaktivität-Steuersignals bzw. Detektorstufe (im beeinflussbaren Funkmodul) zum Empfangen und Detektieren bzw. Verarbeiten des empfangenen Funkaktivität-Steuersignals kann mit Hilfe jener Hard- und/oder Software - z.B. Prozessor sowie Speicher und weitere analoge oder digitale Bausteine oder eines anwendungsspezifischen integrierten Bausteins (ASIC für "application-specific integrated circuit") - realisiert sein, welche bei dem jeweiligen Funkmodul zur Verarbeitung von Signale und / oder Daten zum Einsatz kommt. Zusätzlich zu diesen Komponenten weist das jeweilige Funkmodul eine für die Übertragung des Funkaktivität-Steuersignals nötige Schnittstelle auf, die individuell oder als Bestandteil des ASIC ausgeführt sein kann. Auf die speziellen Ausprägungen und Nutzungsmöglichkeiten des Funkaktivität-Steuersignals ist nachfolgend noch im Detail eingegangen.

Die Kopplung zwischen den Funkmodulen kann z.B. auf kapazitive Weise erfolgen, wenn eine Gleichstromkopplung zu vermeiden ist. Grundsätzlich könnte die Kopplung auch mit Hilfe eines Funksignals erfolgen. Als besonders vorteilhaft hat sich jedoch eine Kopplung zwischen den Funkmodulen erwiesen, die durch eine elektrische Leitung oder ein Leitungssystem realisiert ist. Damit ist eine praktisch verzögerungsfreie und vor allem gegen funksignalverursachte Störungen, wie z.B. Funksignale der Funkmodule selbst oder anderer Funksysteme, immune Signalübertragung zwischen den Funkmodulen ermöglicht. Zudem ist eine weitere Beeinflussung des Funkverkehrs zwischen den Funkmodulen und den jeweiligen Funk-Kommunikationsgeräten verursacht durch die Signalübertragung des Funkaktivität-Steuersignals zwischen den Funkmodulen zuverlässig vermieden.

Eine einzige Leitung kann dann von Vorteil sein, wenn in einer einfachsten Form der Realisierung der Erfindung lediglich ein Signal mit zwei Pegelwerten als Informationsgehalt zwecks Beeinflussung des anderen Moduls zur Anwendung kommt. Hierbei kann ein Pegelwert (z.B. +2,5 Volt) einen beeinflussenden Zustand und einen anderer Pegelwert (z.B. GND oder 0 Volt) einen nicht beeinflussenden Zustand repräsentieren.

Eine einzige Leitung kann jedoch auch dann von Vorteil sein, wenn mehr als zwei Pegelzustände für die Informationsübertragung zum anderen Funkmodul verwendet werden oder z.B. auch eine serielle Kommunikation zwischen den Funkmodulen implementiert ist. Dies ist dann von Vorteil, wenn nicht nur der beeinflussende oder nicht beeinflussende Zustand zu erzielen ist, sondern auch noch weitere Befehle (Steuerkommandos) sowie Parameter oder Werte als Informationsgehalt zu übergeben sind. So kann eine solche Datenleitung zum Senden von z.B. Steuerbefehlen (z.B. mit der Bedeutung "anderes Funkmodul x sei 10 Sekunden still") an einzelne oder mehrere Funkmodule oder auch Broadcasts (also eine Aussendung) an alle Funkmodule (z.B. mit der Bedeutung "alle anderen Funkmodule sind jetzt still") verwendet werden. Gleiches gilt in analoger Weise für ein Leitungssystem bzw. Bussystem zwischen den Funkmodulen.

Hinsichtlich der Einflussnahme des einen Funkmodus auf die Funkaktivität des anderen Funkmoduls können unterschiedlichste Optionen implementiert sein, für die der jeweilige Informationsgehalt mit dem Funkaktivität-Steuersignal bereitzustellen ist, wobei auch Kombinationen der individuellen Optionen zur Anwendung kommen können.

So kann z.B. das beeinflussbare Funkmodul z.B. zum Aussetzen seiner Funkaktivität (Stummschalten) ausgebildet sein. Seine Rückkehr in einen aktiven Funkzustand kann automatisch erfolgen. Es kann jedoch auch derart ausgebildet sein, dass es durch eine weitere Beeinflussung bzw. Veränderung der Beeinflussung wieder seine reguläre Funkaktivität aufnimmt.

Zudem kann im beeinflussbaren Funkmodul implementiert sein, dass es seine Funkaktivität während einer vordefinierten Zeitspanne oder gemäß einer durch das beeinflussende Funkmodul definierten Zeitspanne aussetzt. Im letzteren Fall muss das beeinflussende Funkmodul zum Definieren der passenden Zeitspanne und zum Übermitteln dieser Zeitspanne ausgebildet sein.

Das beeinflussbare Funkmodul kann jedoch auch derart ausgebildet sein, dass es auf eine Beeinflussung hin seine Sendeleistung automatisch auf einen vordefinierten Wert einstellt (vermindert) oder an einen durch das beeinflussende Funkmodul definierten Wert anpasst. Im letzteren Fall muss dass beeinflussende Funkmodul zum Definieren der erwünschten Sendeleistung und zum Übermitteln des entsprechenden Werts der Sendeleitung ausgebildet sein.

Weiterhin kann das beeinflussbare Funkmodul derart ausgebildet sein, dass es seine Funkkanalbelegung gemäß einem vordefinierten Schema oder gemäß einem durch das beeinflussende Funkmodul definierten Schema anpasst. Im letzteren Fall muss das beeinflussende Funkmodul zum Definieren der erwünschten Kanalbelegung und zum Übermitteln des entsprechenden Kanalbelegungsschemas ausgebildet sein.

Die Erfindung findet ihren besonders bevorzugten Einsatz in einem Funknetz, in dem das hinsichtlich seiner Funkaktivität beeinflussbare andere Funkmodul zum Kommunizieren gemäß einem WLAN-Standard mit WLAN-fähigen Funk-Kommunikationsgeräten oder zum Kommunizieren mit elektronischen Preisanzeigeschildern als Funk-Kommunikationsgeräte ausgebildet ist. Solche Funkmodule verursachen einen kaum vorhersagbaren Funkverkehr, dessen Einfluss auf zeitkritische Aktivitäten des zum beeinflussen ausgebildeten Funkmoduls gravierend sein können. Neben den erwähnten Typen könne auch andere Typen von Funk-Kommunikationsgeräten zum Einsatz kommen.

Besonders vorteilhafte Wirkungen lassen sich mit der Erfindung erzielen, wenn das zum Beeinflussen ausgebildete eine Funkmodul zum Kommunizieren mit elektronischen Preisanzeigeschildern als die zweiten Funk-Kommunikationsgeräte ausgebildet ist.

Die vorangehend erwähnten elektronischen Preisanzeigeschilder können zu ihrer Energieversorgung einen Energiespeicher, wie z.B. eine Batterie oder ein Solarpaneel gekoppelt mit einer aufladbaren Batterie aufweisen. Eine Anzeigeeinheit solcher Preisanzeigeschilder kann z.B. mit Hilfe von LCD-Technologie, bevorzugt jedoch mit Elektronic-Ink-Technologie (auch E-Ink als Synonym für elektronisches Papier genannt) realisiert sein.

Um möglichst energieeffizient zu arbeiten, weisen die Preisanzeigeschilder verschiedene Betriebs-Zustände auf. Ein Preisanzeigeschild weist in einem Aktiv-Zustand einen relativ hohen Energieverbrauch auf. Der Aktiv-Zustand liegt z.B. beim Senden oder Empfangen von Daten, beim Display-Update, beim Batteriespannungsmessen usw. vor. In einem Schlaf-Zustand liegt dagegen ein relativ niedriger Energieverbrauch vor. Bevorzugt werden so viele elektronische Komponenten wie möglich von der Stromversorgung getrennt bzw. abgeschattet oder zumindest in einem Modus mit möglichst geringem Energiebedarf betrieben. Der Aktiv-Zustand liegt vorwiegend in dem für den Funk-Tag bestimmten Zeitschlitz zur Kommunikation mit der Kommunikationsstation vor. In dem Aktiv-Zustand weist das Preisanzeigeschild eine Empfangsbereitschaft auf, um Befehle und gegebenenfalls auch Empfangs-Daten von dem Funkmodul zu empfangen und mit Hilfe seiner Logikstufe zu verarbeiten. Im Aktiv-Zustand können auch mit Hilfe der Logikstufe Sende-Daten generiert und an das Funkmodul kommuniziert werden. Um energieeffizient zu arbeiten und damit eine möglichst lange Lebensdauer des Preisanzeigeschilds zu erreichen, besteht die grundlegende Betriebsstrategie darin, das Preisanzeigeschild so lange wie möglich im Schlaf-Zustand zu halten und nur dann, wenn unbedingt nötig, zwecks Datenübertragung mit dem Funkmodul für eine möglichst kurze Zeitspanne im Aktiv-Zustand zu betreiben.

Bei solchen Preisanzeigeschildern ist folglich immer im Fall einer Kommunikation mit dem Funkmodul ein relativ hoher Energieverbrauch gegeben. Daher wirken sich Störungen dieser Kommunikation verursacht durch ein anderes Funkmodul, die zwingend zu einer unerwünschten Verlängerung der Kommunikationsdauer des betreffenden Preisanzeigeschilds mit dem zugehörigen Funkmodul führen, als äußerst negativ auf die Lebenszeit des elektronischen Preisanzeigeschildes aus. Die Erfindung ermöglicht nun erstmals die Bevorzugung des zur Kommunikation mit den elektronischen Preisanzeigeschildern dienenden Funkmoduls und folglich die zuverlässige Vermeidung von Störungen des Funkverkehr mit den elektronischen Preisanzeigeschildern. Selbst wenn beide Funkmodule (das beeinflussende und das beeinflussbare) als zur Kommunikation mit elektronischen Preisanzeigeschildern ausgebildete Funkmodule realisiert sind, kann durch die erfindungsgemäßen Maßnahmen eine gegenseitige Störung im Funkverkehr vermieden werden. Dies kann durch eine fix vordefinierte Priorisierung des einen gegenüber dem anderen Funkmodul erfolgen. Dies kann jedoch auch durch eine dynamische sich aus der jeweiligen Situation bzw. dem jeweiligen Kommunikationsbedarf ergebende Bevorzugung des einen oder des anderen Funkmoduls ergeben. Gemäß dieser Implementierung kann das zuerst beeinflussende Funkmodul Priorität über das beeinflusste Funkmodul erlangen, bis keine Priorität mehr nötig ist. Das zuvor beeinflusste Funkmodul hat sodann selbst die Möglichkeit durch Eigeninitiative selbst Priorität über das zuvor beeinflussende Funkmodul zu erlangen und seinen Funkverkehr ungestört durchzuführen. Die beiden Funkmodule sind also hinsichtlich der Möglichkeit, Priorität zu erlangen, gleichrangig. In allen Fällen kann jeweils das beeinflussende Funkmodul seine Kommunikation mit äußerster Effizienz durchführen, was entscheidend zu einer nachhaltigen Schonung der Energieressourcen des jeweiligen elektronischen Preisanzeigeschilds beiträgt.

Gemäß einem bevorzugten Aspekt der Erfindung kommt bei der Kommunikation mit den elektronischen Preisanzeigeschildern ein Zeitschlitzkommunikationsverfahrens zur Anwendung, bei dem in sich wiederholender Folge eine Anzahl von Zeitschlitzen pro Zeitschlitzzyklus zur Kommunikation bereitstehen, wobei insbesondere jeder Zeitschlitz durch ein eindeutiges Zeitschlitzsymbol gekennzeichnet ist. Im Rahmen dieses Zeitschlitzkommunikationsverfahrens können individuelle elektronische Preisanzeigeschilder adressiert und /oder mit (Befehls- bzw. Anzeige-) Daten versorgt werden, sowie auch Daten von den Preisanzeigeschildern empfangen werden.

Bei dem Zeitschlitzkommunikationsverfahren kommen z.B. innerhalb von n Sekunden, z.B. 15 Sekunden, m Zeitschlitze, z.B. 255 Zeitschlitze, zum Einsatz. Die n Sekunden bilden einen Zeitschlitzzyklus. In diesem Zeitschlitzkommunikationsverfahren stehen also m Zeitschlitze innerhalb eines Zeitschlitzzyklus für eine Kommunikation mit den Preisanzeigeschildern zur Verfügung. Jedes der Preisanzeigeschilder kann einem der Zeitschlitze zugeordnet sein, wobei einem bestimmten Zeitschlitz auch mehrere Preisanzeigeschilder zugeordnet sein können. In einem System, in dem z.B. während eines Zeitschlitzzyklus von 15 Sekunden 256 Zeitschlitze zu je 58,6 Millisekunden existieren, lassen sich problemlos zwei bis fünf Preisanzeigeschilder pro Zeitschlitz individuell adressieren und individuelle Aufgaben mit einem Befehl an sie delegieren. Jedes Preisanzeigeschild kann das Abschließen (Erledigen) des ausgeführten Befehls mit Bestätigungsdaten quittieren, die bevorzugt in jenem Zeitschlitz ausgesandt werden, in dem der Befehl empfangen wurde. Außerhalb des für das jeweilige Preisanzeigeschild bestimmten Zeitschlitzes wird das Preisanzeigeschild vorwiegend in dem energiesparenden Schlaf-Zustand betrieben. In dem Schlaf-Zustand führt seine Logikstufe bzw. eine Zeitsteuerstufe nur jene Aktivitäten durch, die für das Timing zum rechtzeitigen Aufwachen nötig sind, damit das Preisanzeigeschild zum nächsten für ihn bestimmten Zeitschlitz zum Empfang des Synchronisations-Datensignals, seinen synchronen Zustand feststellen und / oder zur Kommunikation mit dem Funkmodul bereit ist. Ein synchrones Preisanzeigeschild wird so lange als möglich in seinem Schlafzustand betrieben.

In diesem Zusammenhang ist es besonders vorteilhaft, dass immer dann die Funkaktivität des anderen Funkmoduls beeinflusst wird, wenn das beeinflussende Funkmodul ein Synchronisations-Datensignal aufweisend das Zeitschlitzsymbol oder Adressdaten zum Adressieren eines elektronischen Preisanzeigeschilds oder Befehlsdaten zum Übermitteln eines Befehls an ein elektronisches Preisanzeigeschild oder Nutzdaten zur Verarbeitung in dem elektronischen Preisanzeigeschild (wie z.B. zur Anzeige eines Preises eines Produkts oder weitere produkt- oder preisbezogener Informationen) an das elektronische Preisanzeigeschild kommunizieren will bzw. muss. Zudem ist es besonders vorteilhaft, dass immer dann die Funkaktivität des anderen Funkmoduls beeinflusst wird, wenn das beeinflussende Funkmodul Bestätigungsdaten von dem elektronischen Preisanzeigeschild erwartet oder das beeinflussende Funkmodul von dem elektronischen Preisanzeigeschild Antwortdaten erwartet.

Die Zeitspanne der beeinflussten Funkaktivität kann vordefiniert oder frei definierbar (z.B. durch das beeinflussende Funkmodul) sein. Um eine effiziente und zuverlässige Implementierung der Erfindung sicherzustellen, ist es von besonderem Vorteil, wenn sich die Zeitspanne der beeinflussten Funkaktivität an dem durch das Zeitschlitzkommunikationsverfahren definierten Zeit- bzw. Zeitschlitz-Raster bzw. -Systematik orientiert. Konkret bedeutet dies, dass nach einer Beeinflussung durch das beeinflussende Funkmodul das beeinflusste Funkmodul seine Funkaktivität während der tatsächlichen Kommunikation des beeinflussenden Funkmoduls mit dem betroffenen Preisanzeigeschild anpasst. Insbesondere startet die Zeitspanne der angepassten Funkaktivität mit einer Vorlaufzeitspanne zu der Kommunikationszeitspanne, während der eine Kommunikation zwischen dem beeinflussenden Funkmodul und einem betroffenen elektronischen Preisanzeigeschild erfolgt. Die angepasst Funkaktivität kann zu jenem Zeitpunkt beendet werden, zu dem die Kommunikationszeitspanne endet. Die Dauer der angepassten Funkaktivität kann jedoch auch mehrere, insbesondere knapp benachbarte Kommunikationszeitspannen überdecken. Die Existenz der angepassten Funkaktivität muss sich nicht auf einen einzigen Zeitschlitz beschränken. Sie kann auch benachbarte Zeitschlitze involvieren, sich also von einem ersten Zeitschlitz bis in einen zweiten Zeitschlitz oder weiter erstrecken.

Grundsätzlich kann das beeinflussende Funkmodul immer genau dann eine Beeinflussung vornehmen, wenn es einen Funkkommunikationsbedarf hat. Das beeinflusste Funkmodul muss dann im Nachgang an die Einflussnahme seine Funkaktivität entsprechend anpassen. Als besonders vorteilhaft hat es sich jedoch weisen, wenn das zum Beeinflussen ausgebildete eine Funkmodul zum vorausschauenden Bestimmen des Zeitpunkts der Beeinflussung ausgebildet ist. Somit lässt sich immer rechtzeitig eine Beeinflussung vornehmen, die zuverlässig zu einer störungsfreien Funkkommunikation führt. Dies ist insbesondere deshalb von Vorteil, weil auch das zu beeinflussende Funkmodul eine gewisse Reaktionszeit benötigt, um die Einflussnahme durch das beeinflussende Funkmodul umzusetzen.

Gemäß einem weiteren, allgemeinen Aspekt der Erfindung kann die Beeinflussung jedoch auch durch vordefinierte Regeln erfolgen, sodass z.B. ein Dead-Iock (ein Funkmodul kommt gar nicht mehr an die Reihe) ausgeschlossen werden kann.

Gemäß einem weiteren Aspekt ist es von Vorteil, wenn der Zeitpunkt der Beeinflussung auf Grundlage des erwarteten Zeitpunkts einer Kommunikation zwischen einem Funk-Kommunikationsgerät und dem zum Beeinflussen ausgebildeten Funkmodul festgelegt wird. Besonders bevorzugt wird der Zeitpunkt der Beeinflussung unter Berücksichtigung der Reaktionsgeschwindigkeit des zu beeinflussenden Funkmoduls ermittelt. Somit kann die Beeinflussung zu einem Zeitpunkt vor der tatsächlich stattfindenden Funkaktivität des beeinflussenden Funkmoduls stattfinden.

Da dem beeinflussenden Funkmodul das Charakteristikum bzw. das Timing seines Funkprotokolls bekannt ist, lässt sich die vorausschauende Bestimmung relativ einfach direkt in den zum beeinflussen ausgebildeten Funkmodul realisieren. Dort wird nicht mehr nur auf den Zeitpunkt des Kommunizierens gewartet und dann einfach kommuniziert, sondern vorab geprüft, wann der nächste Kommunikationszeitpunkt auftreten wird, und mit entsprechender Vorlaufzeit die Beeinflussung vorgenommen, damit diese zum Kommunikationszeitpunkt zuverlässig ihre Wirkung entfaltet.

Vor dem Hintergrund der erörterten Aspekte der Erfindung können gemäß einem Ausführungsbeispiel in einer Basisstation z.B. nur zwei Funkmodule zum Kommunizieren mit Preisanzeigeschildern integriert sein. Vorteilhaft kann die Beeinflussung nun so ausgelegt sein, dass für beide Preisanzeigeschild-Funknetze ein hinsichtlich des Energiebedarfs der Preisanzeigeschilder optimierter Betrieb sichergestellt ist. Auch können unter den Aspekten energieschonender Betrieb der Preisanzeigeschilder sowie effiziente Kommunikation im Funknetz z.B. zwei Stück Funkmodule zur Kommunikation mit Preisanzeigeschildern und z.B. zwei Stück Funkmodule zur Kommunikation mit WLAN-Funk-Kommunikationsgeräten in der Basisstation integriert sein. In dieser Konfiguration kann z.B. jeweils eines der Preisanzeigeschild-Funkmodule und eines der WLAN-Funkmodule das 2,4 GHz Band und das jeweils andere Funkmodul das 5 GHz Band benützen.

Die erörterte Funk-Basisstation kann die gesamte Intelligenz und Rechenleistung, die nötig ist um die Funktionalität des jeweiligen Funkmoduls zu ermöglichen, bereitstellen. Da mehrere Funkmodule in der Basisstation integriert sind, erfolgt dies durch Hardware mit entsprechender Rechenleistung, ein leistungsstarkes Betriebssystem, sowie entsprechende Software zur Steuerung der verschiedenen in der jeweiligen Basisstation integrierten Funkmodule sowie des Datenverkehres mit z.B. einem über ein leitungsgebundenes Netzwerk erreichbaren Server. Somit bildet die erfindungsgemäße Basisstation einen kombinierten Accesspoint, zur Kommunikation in unterschiedlichen Funknetzen. Der kombinierte Accesspoint stellt also die Eigenschaften bzw. Funktionen verschiedener, individueller Accesspoints zur Verfügung, die für die Kommunikation mit dem betreffenden (ihm zugeordneten) Funk-Kommunikationsgeräten erforderlich ist. Jedoch kann gemäß einem anderen Ausführungsbeispiel der Erfindung ein erheblicher Teil besagter Intelligenz und Rechenleistung auch aus der Basisstation ausgelagert werden, worauf nachfolgend noch eingegangen ist.

Gemäß einem weiteren Aspekt der Erfindung weist die Funk-Basisstation einen Host-Computer auf, der mit Hilfe eines kabelgebundenen Computernetzwerks mit einem Server koppelbar ist und zum Austauschen von Daten zwischen dem Server und den Funkmodulen ausgebildet ist, wobei der Host-Computer ausgebildet ist zum Übertragen der Daten zwischen dem Server und dem Host-Computer mit Hilfe eines Netzwerk-Protokolls, insbesondere TCP/IP-Protokolls, und zwischen den Funkmodulen und dem Host-Computer mit Hilfe eines Schnittstellen-Protokolls, insbesondere eines seriellen Schnittstellen-Protokolls, und zum Tunneln eines Rohdatenverkehrs zwischen den Funkmodulen und dem Server. Damit lassen sich mit einem entsprechend leistungsfähigen Host-Computer problemlos mehrere in der Funk-Basisstation integrierte Funkmodule mit Daten bedienen. Bevorzugt wird in jedem der Funkmodule das zutreffende Funkprotokoll zur Anwendung gebracht, um den Funkverkehr mit dem zutreffenden Funk-Kommunikationsgerät abzuwickeln.

Besonders bevorzugt ist der Server zum Bereitstellen einer virtuellen Instanz einer Funk-Basisstation , und die Funk-Basisstation zum Tunneln eines Rohdatenverkehrs zwischen den Funkmodulen und der virtuellen Instanz der Funk-Basisstation ausgebildet. Gemäß dieser besonders bevorzugten Lösung kann die gesamte Intelligenz und Funktionalität, die einer konventionellen Funk-Basisstation z.B. mit Hilfe ihres Betriebssystems zuzuschreiben ist, auf einen leistungsstarken Server ausgelagert werden. Die erfindungsgemäße Funk-Basisstation aufweisend ihre integrierten Funkmodule kommuniziert mit dem Server mit Hilfe ihres Host-Computer über eine kabelgebundenes Netzwerk, wie z.B. eine lokales Computernetzwerk (LAN für "lokal area network"), wobei der Host-Computer relativ wenig Rechenleistung benötigt. Mit Hilfe des Host-Computers erfolgt in der erfindungsgemäßen Basisstation nur mehr eine Umsetzung der vom Server erhaltenen Rohdaten von z.B. der TCP/IP-Kommunikation auf die für die Kommunikation mit den FunkModulen verfügbare Schnittstelle. Dies kann z.B. eine parallele oder eine serielle Ein/Ausgabe-Schnittstelle sein, besonders bevorzugt eine "universal asynchronous receiver/transmitter" (UART) konforme Schnittstelle. Damit ist einerseits der Vorteil erhalten, dass die Hardware der erfindungsgemäßen Basisstation relativ günstig zu realisieren ist, weil an die Funktionalität und Leistungsfähigkeit des Host-Computers keine hohen Ansprüche zu stellen sind. Andererseits werden zugleich die am Server ja ohnehin ausreichend vorhandenen Ressourcen optimal ausgenützt. Das System ist somit hinsichtlich seiner Ressourcen-Verteilung und -Nutzung optimiert. Vorteilhaft ist auch, dass in dem System zwischen dem Server und der erfindungsgemäßen Funk-Basisstation ein konstantes Datenaufkommen ("network traffic") realisierbar ist, was zur Stabilität des Netzwerkes erheblich beiträgt. Dabei werden ungenützte Datenpakete mit Nulldaten belegt und Übertragen. Das erfindungsgemäße System verhält sich nach außen hin transparent wie ein konventionelles System aus konventionellem Server, und zumindest zwei oder mehr separaten, konventionellen Funk-Basisstationen.

Während der Zeitpanne der angepassten Funkaktivität kann es vorkommen, dass die Kommunikation zwischen dem beeinflussten Funkmodul und dem ihm zugeordneten Funk-Kommunikationsgerät unterbrochen wird. Um keinen Rohdatenverlust zu erleiden, werden gemäß einem allgemeinen Aspekt der Erfindung die noch nicht übermittelten Rohdaten zwischengespeichert und nach Beendigung der beeinflussten Funkaktivität die Funk-Kommunikation mit dem betroffenen Funk-Kommunikationsgerät fortgesetzt, wobei zunächst die zwischengespeicherten Daten übertragen werden und neu hinzukommende Rohdaten ebenfalls zwischengespeichert werden und erst nach und nach übertragen werden. Die Zwischenspeicherung kann je nach Implementierung direkt im betroffenen Funkmodul, im Host-Computer der Basisstation oder im Server erfolgen.

Diese und weitere Aspekte der Erfindung ergeben sich durch die nachfolgend erörterten Figuren.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes System;
- Fig. 2: ein erstes Zustandsdiagramm;
- Fig. 3: ein zweites Zustandsdiagramm;
- Fig. 4: ein drittes Zustandsdiagramm.

### BESCHREIBUNG DER AUSFÜHRUNGSBEISPIELE

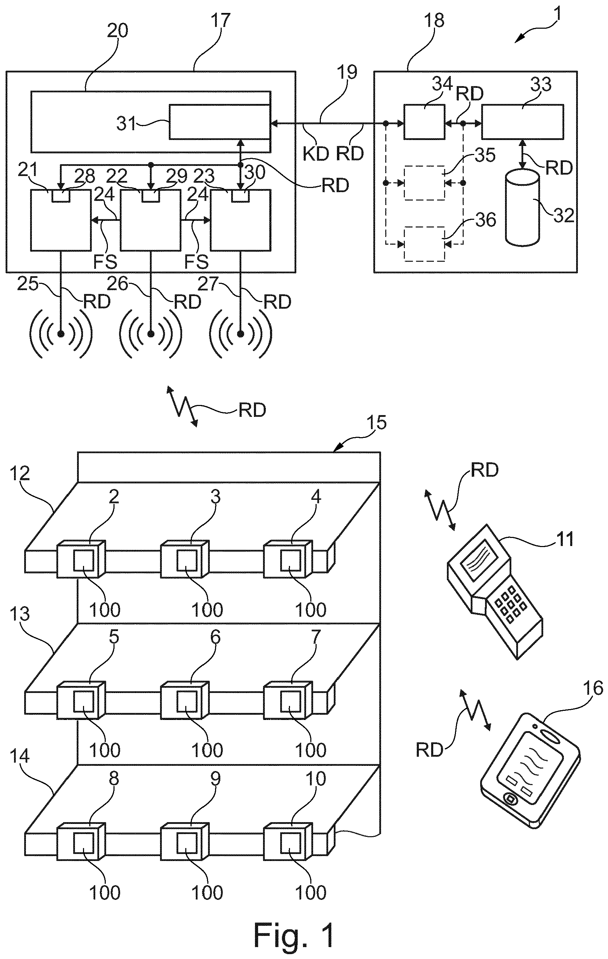

In der Figur 1 ist ein in den Räumlichkeiten eines Supermarkts installiertes erfindungsgemäßes System 1 zur Funkkommunikation mit unterschiedlichen Funk-Kommunikationsgeräten dargestellt. Das System 1 realisiert ein Funknetzwerk und ermöglicht die Funkkommunikation mit einer Anzahl von elektronischen Preisanzeigeschildern 2 - 10, nachfolgend kurz ESL 2-10 genannt, sowie tragbaren elektronischen Stickcodelesegeräten 11 (lediglich ein einziges ist dargestellt), die Bestandteil eines elektronischen Warenwirtschaftssystems des Supermarkts sind. Jedes ESL 2 - 10 weist eine Anzeigeeinheit 100 auf und ist an Regalböden 12 - 14 eines Regals 15 korrespondierend zu auf dem Regalboden positionierten Produkten (nicht dargestellt) angebracht, zu denen mit ihrer Hilfe Preis- und Produktinformationen angezeigt werden. Zudem können Kunden des Supermarkts mit Hilfe ihrer mobilen Funk-Kommunikationsgeräte (ebenfalls nur ein einziges dargestellt), wie z.B. Mobiltelefone oder mobile Computer, nachfolgend kurz Benutzergeräte 16 genannt, Onlinedienste über einen Gastzugang des Funknetzwerks des Supermarkts nützen. Das Funknetzwerk ermöglicht eine Kommunikation mit den unterschiedlichen Gruppen an Funk-Kommunikationsgeräten 2-10, 11, 16 mit unterschiedlichen Protokollen und unterschiedlicher Priorität.

Zur Realisierung dieses Funknetzwerks weist das System 1 eine Funk-Basisstation 17, nachfolgend kurz Station 17 genannt, und einen Server 18 auf, die miteinander über ein lokales, kabelgebundenes Netzwerk (LAN) 19 verbunden sind. Über dieses LAN 19 kommuniziert der Server 18 mit der Station 17 unter Zuhilfenahme des TCP/IP-Protokolls, wobei eingebettet in Kommunikationsdaten KD Rohdaten RD mit den jeweiligen Geräten 2-10, 11 und 16 austauschbar sind.

Die Station 17 weist einen Host-Computer 20, ein erstes Funkmodul 21 zur Kommunikation mit den Strichcodelesegeräten 11 gemäß einem WLAN-Standard, ein zweites Funkmodul 22 zur Kommunikation mit den ESL 2 - 10 gemäß einem proprietären Protokoll, worauf nachfolgend noch im Detail eingegangen wird, und ein drittes Funkmodul 23 zur Kommunikation mit den mobilen Benutzergeräten 16 gemäß einem WLAN-Standard auf. Das zweite Funkmodul 22 ist über eine Steuerleitung 24 mit dem ersten und dem dritten Funkmodul 21, 23 verbunden. Die Steuerleitung 24 ist Bestandteil einer Kopplung des zweiten Funkmoduls 22 mit den beiden anderen Funkmodulen 21, 23 und ist lediglich wegen der gewählten Platzierung der Funkmodule 21 - 23 zweiteilig ausgeführt. Es sei jedoch erwähnt, dass gemäß einem anderen Ausführungsbeilspiel zwei getrennte Steuerleitungen zur Anwendung kommen können. Die Steuerleitung 24 dient zum Übertragen eines Funkaktivität-Steuersignals, nachfolgend kurz Steuersignal FS genannt, von dem zweiten Funkmodul 22 an die beiden anderen Funkmodule 21, 23, mit dessen Hilfe die Funkaktivität der beiden anderen Funkmodule 21, 23 beeinflusst wird. Im vorliegenden Fall handelt es sich bei dem Steuersignal FS um ein Signal bei dem ein erster Pegel (0V oder GND) anzeigt, dass keine Beeinflussung vorliegt, und ein zweiter Pegel (+2,5V oder HIGH) anzeigt, dass eine Beeinflussung vorliegt. In der hier vorliegenden Implantierung wird bei Eintreten des zweiten Pegels und solange der zweite Pegel vorliegt die Funkaktivität der beiden anderen Funkmodule 21, 23 ausgesetzt, also keine Funksignale ausgesandt (Stummschaltung). Nur bei Vorliegen des ersten Pegels weisen die beiden anderen Funkmodule eine normale Funkaktivität auf, bei der sie Funksignale aussenden können. Es sein an dieser Stelle erwähnt, dass zwischen den Funkmodulen zwecks Beeinflussung auch ein serielles oder paralleles Datenübertragungssystem oder auch ein Datenbus vorliegen kann.

Die Station 17 weist weiterhin für jedes der Funkmodule 21 - 23 eine für seinen Funkverkehr nutzbare Antenne 25 - 27 auf. Jedes der Funkmodule 21 -23 weist die für die physikalische Funkkommunikation nötigen Funktionseinheiten (nicht im Detail dargestellt) realisiert mit Hilfe ihrer Hard und / oder Software auf und ist mit der eigenen Antenne 25 - 27 verbunden.

Jedes der Funkmodule 21 - 23 weist eine serielle Schnittstelle 28 - 30 zur kabelgebunden Kommunikation mit dem Host-Computer 20 auf. Der Host-Computer 20 ist einerseits zum Kommunizieren gemäß einem seriellen Kommunikationsprotokoll mit den Funkmodulen 21 - 23 und andererseits zur TCP/IP-Protokoll-basierten Kommunikation mit dem Server 18 ausgebildet, wobei ein Rohdatenverkehr zwischen dem Server 18 und dem jeweiligen Funkmodul 21 - 23 von dem einen Protokoll zum anderen Protokoll getunnelt wird. Zu diesem Zweck weist der Host-Computer neben anderen nicht im Detail erörterten Funktionsstufen eine Konversionsstufe 31 auf, die mit Hilfe von Software, die auf der Hardware des Host-Computers ausgeführt wird, realisiert ist.

Der Server 18 weist eine Datenspeicherstufe 32, wie z.B. eine Datenbank zur Speicherung aller Information betreffen das Warenwirtschaftssystem und / oder die Kommunikation mit den einzelnen Teilnehmern des Funknetzes auf. Im Betrieb realisiert der Server 18 eine Server-Prozess-Stufe 33 zur Bereitstellung aller Server-Prozesse bzw. -Funktionalitäten. Zudem realisiert der Server 18 eine virtuelle Instanz 34 der Station 17 zur Bereitstellung aller Station-Funktionalitäten. Dabei wird auf dem Server 18 mit Hilfe seiner Hardware (Prozessor, Speicher, Schnittstellen usw.) eine entsprechende Software (ein Programm) abgearbeitete, mit deren Hilfe die jeweilige Funktionalität bereitgestellt wird. Mit Hilfe der virtuellen Instanz 34 wird die Station 17 hinsichtlich ihrer physikalischen Datenverarbeitungsressourcen signifikant entlastet und die bestehende Rechenleistung des Servers 18 vorteilhaft zur Bereitstellung der "Intelligenz" der Station 17 genützt. Folglich kann eine relativ kostengünstige Hardware für die Station 17 zum Einsatz kommen.

Im vorliegenden Fall wurde von einer einzigen Station 17 in den Räumlichkeiten des Supermarkts, z.B. im Erdgeschoß, ausgegangen. Werden jedoch mehrere Stationen 17, wie z.B. je eine pro Verkaufsetage, eingesetzt, ist es ein Leichtes, auf dem Server 18 neben der ersten Instanz 33 weitere Instanzen 35, 36 (angedeutet durch Blöcke umrahmt mit unterbrochene Linien) zu erzeugen und den Rohdatenverkehr RD für die auf den anderen Etagen (z.B. erster und zweiter Stock) installierten Stationen 17 (nicht dargestellt) zu verarbeiten. Das System 1 ist folglich durch Vervielfältigung einer relativ kostengünstigen Station 17 beliebig skalierbar. Zudem erlaubt die Realisierung des Systems 1 den Datenverkehr auf dem LAN konstant zu halten.

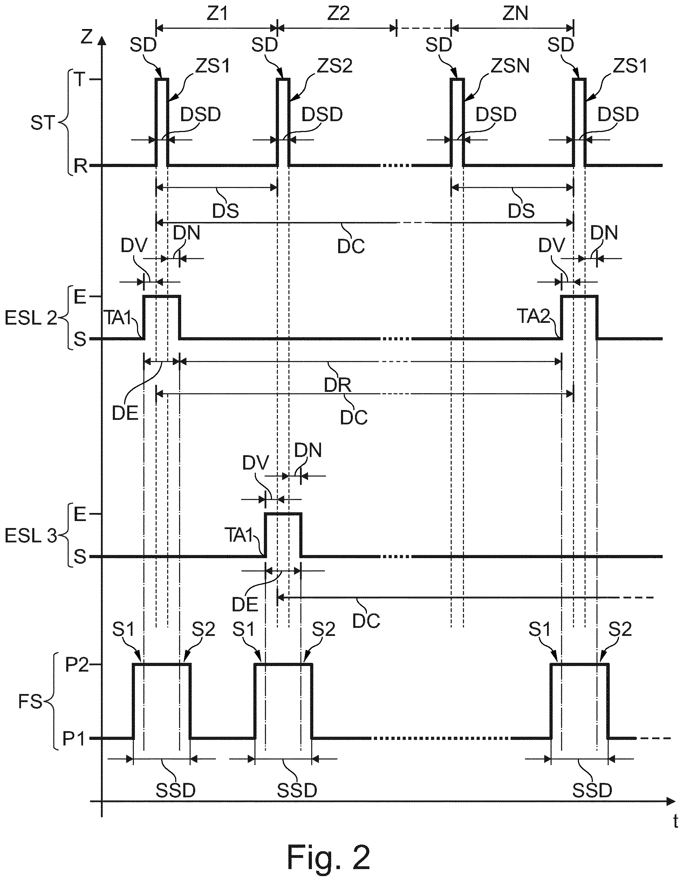

In der Kommunikation zwischen den ESL 2 - 10 und dem Funkmodul 22, dem sie zugeordnet sind, kommt ein Zeitschlitzkommunikationsverfahren zum Einsatz, dessen Prinzip in den Figuren 2 - 4 visualisiert ist und mit deren Hilfe die Funktionsweise des Systems veranschaulicht wird. Auf der Abszissenachse ist die Zeit t eingetragen. Auf der Ordinatenachse sind Zustände Z der jeweiligen in der Erörterung berücksichtigten Komponenten bzw. Signale des Systems 1 eingetragen. Die Diagramme zeigen folglich den zeitlichen Zustandsverlauf.

In den Figuren 2-4 zeigt jeweils die oberste Zustandsfolge die Zustände des zweiten Funkmoduls 22 gekennzeichnet durch ST. Während einer Zeitschlitzzyklus-Dauer DC (z.B. 15 Sekunden) stehen N Zeitschlitze Z1 ... ZN (z.B. 256) mit identischer Zeitschlitzdauer DS (z.B. ca. 58 Millisekunden) zur Verfügung. Während der Zeitschlitzzyklus-Dauer DC wechselt das zweite Funkmodul 22 zwischen einem Sendezustand T und einem Ruhezustand R. Der Sendezustand T wird immer zu Beginn eines Zeitschlitzes Z1 ... ZN eingenommen und für eine Synchronisations-Datensignal-Dauer DSD (oder Sendezeitdauer DSD des Synchronisations-Datensignals SD) aufrecht erhalten, um mit dem jeweiligen Synchronisations-Datensignal SD ein zutreffende Zeitschlitzsymbol ZS1, ZS2, ... ZSN zu senden. Als das jeweils zutreffende Zeitschlitzzyklussymbol ZS1 ...ZSN kommt die laufende Nummer des jeweiligen Zeitschlitzes Z1 ... ZN in der Reihenfolge des Auftretens der Zeitschlitz Z1 ... ZN zum Einsatz.

In der Fig. 2 ist dargestellt, dass sich das erste ESL 2 im synchroneren Zustand befindet. Es erwacht zu einem ersten Aufwachzeitpunkt TA1 aus seinem extrem energiesparenden Schlaf-Zustand S und wechselt mit einer relativ kurzen Vorlaufzeit DV vor einem erwarteten Auftreten eines Synchronisations-Datensignals SD in seinen empfangsbereiten Aktiv-Zustand E, empfängt das Synchronisations-Datensignal SD während einer Empfangszeitdauer DE mit dem ersten Zeitschlitzsymbol ZS1, stellt durch Vergleich des niederwertigsten Bytes B0 seiner Hardware-Adresse mit dem empfangenen Zeitschlitzsymbol ZS1 fest, dass der für das erste ESL 2 bestimmter erste Zeitschlitz Z1 angezeigt ist (Übereinstimmung der zu vergleichenden Bytes: B0 der Hardware-Adresse und erstes Zeitschlitzsymbol ZS1), behält die zum Steuern des Aufwachens benutzen Parameter für das Aufwachen im nachfolgenden Zeitschlitzzyklus zwecks Definition des neuen Aufwachzeitpunkts bei und wechselt mit einer relativ kurzen Nachlaufzeit DN zurück in den Schlaf-Zustand S, um nach Ablauf der vorgesehen Schlaf-Zustand-Verweilzeit DR planmäßig zum neuen (zweiten) Aufwachzeitpunkt TA2 mit besagter Vorlaufzeit DV vor dem neuerlichen Beginn des ersten Zeitschlitzzyklus Z1 aufzuwachen. Gleiches gilt auf analoge Weise für das zweite ESL 3 sowie alle anderen ESL 4 - 10 soweit sie sich ebenso wie das erste ESL 1 im synchronen Zustand befinden. Alle ESL 2 - 10 sind dazu ausgebildet einen nicht synchronen Zustand zu erkennen und sich zu synchronisieren.

Die in der Fig. 2 abgebildete letzte (unterste) Zustandsfolge zeigt das Steuersignals FS im Wechsel zwischen dem ersten Pegel P1 und dem zweiten Pegel P2. Immer dann, wenn das zweite Funkmodul 22 das Synchronisations-Datensignal SD senden möchte, werden die beiden anderen Funkmodule 21, 23 mit Hilfe des zweiten Pegels P2 des Steuersignals FS stumm geschaltet, so dass sie keine Funkaktivität aufweisen. Die Zeitspanne (Stummschaltzeitspanne SSD), während der das Stummschalten erfolgt, könnte grundsätzlich auf die Zeitspanne des Auftretens des Synchronisations-Datensignals SD beschränkt sein. Bevorzugt erstreckt sich die Stummschaltzeitspanne SSD mit einer kurzen Vorlaufzeit (erste Sicherheitszeitspanne S1), insbesondre auch einer kurzen Nachlaufzeit (zweite Sicherheitszeitspanne S2) von einigen Millisekunden, um sicherzugehen, dass das Auftreten des Synchronisations-Datensignals DS innerhalb der Stummschaltzeitspanne SSD liegt. Besonders bevorzugt überlappt bzw. überspannt (inklusive Vorlaufzeit und Nachlaufzeit) die Zeitdauer der Existenz des zweiten Pegels P2 (Stummschaltzeitspanne) jedoch auch die Empfangszeitdauer DE, sodass sichergestellt ist, dass im Funkmedium keine Störungen auftreten, welche den Empfang und folglich auch die Prüfung des Synchronismus der ESL 2 - 10 beeinträchtigen könnten. Bei der zuletzt genannten Implementierung würde es auch ausreichen, wenn die Stummschaltzeitspanne SSD mit der Empfangszeitdauer zusammenfällt und folglich gleich lang ist, da in der Empfangszeitdauer DE bereist die Vorlaufzeit DV sowie die Nachlaufzeit DN in Bezug auf das zu erwartende Auftreten des Synchronisations-Datensignal SD berücksichtigt ist.

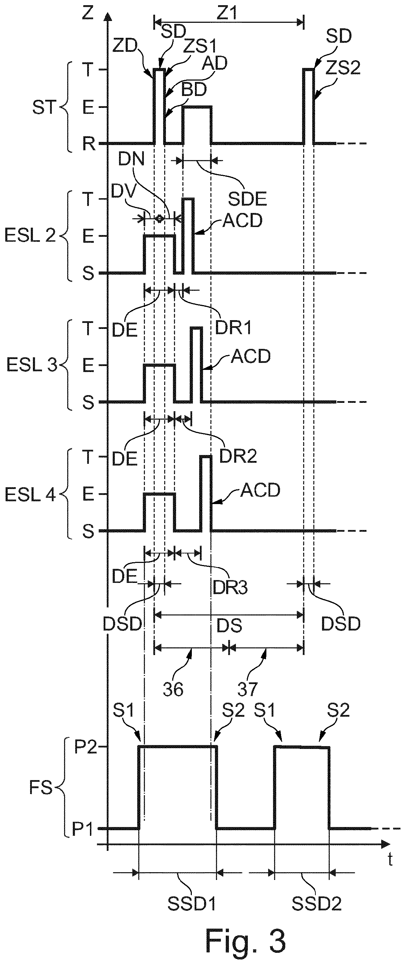

Mit Hilfe der Figur 3 wird eine individuelle Adressierung der ESL 2 - 4 sowie eine individuelle Beauftragung dieser ESL 2 - 4 mit Hilfe von Einfach-Zeitschlitzbefehlen erörtert. Dargestellt ist nur der erste Zeitschlitz Z1 eingebettet zwischen zwei Synchronisations-Datensignalen SD. In dem Synchronisations-Datensignal SD des ersten Zeitschlitzes Z1 werden von dem zweiten Funkmodul 22 Adressdaten AD, Befehlsdaten CD und Bestätigungszeitdaten ZD eingebettet. Mit Hilfe der Adressdaten AD (z.B. Hex B2:00:01) wird das ersten ESL 2, mit Hilfe der Adressdaten AD (z.B. Hex B2:00:02) das zweite ESL 3 und mit Hilfe der Adressdaten AD (z.B. Hex B2:00:03) das dritte ESL 4 individuell adressiert. Mit Hilfe der Befehlsdaten CD wird an das erste ESL 2 ein "PING"-Befehl, an das zweite ESL 3 ebenfalls ein "PING"-Befehl und an das dritte ESL 4 ein "SWPAG2"-Befehl übermittelt. Diese Befehle sind Einfach-Zeitschlitzbefehle, die unmittelbar nach ihrer Dekodierung im betreffenden ESL 2 - 4 mit vernachlässigbarem Zeitaufwand abgearbeitet werden. Mit Hilfe der beiden "PING"-Befehle wird getestet, ob sich das adressierte ESL 2, 3 mit Bestätigungsdaten ACD zurückmeldet, also ob es existiert oder überhaupt reagiert und synchronisiert ist. Mit Hilfe des "SWAPG2"-Befehls wird bei dem dritten ESL 4 ein Umschalten von einer (ersten) aktuellen Speicherpage (oder Speicherseite) auf eine zweite Speicherpage (oder Speicherseite) veranlasst, um z.B. das mit Hilfe seiner Anzeige darzustellende Bild zu verändern. Zudem wird mit dem Synchronisierungs-Datensignal SD ein Bestätigungszeitpunkt für das erste ESL 2 durch Angabe einer ersten Ruhezeitspanne DR1, für das zweite ESL 3 durch Angabe einer zweiten Ruhezeitspanne DR2 und für das dritte ESL 4 durch Angabe einer dritten Ruhezeitspanne DR3 übermittelt. Der Referenzpunkt für die drei Ruhezeitspannen DR1 - DR3 ist immer das Ende der Empfangszeitdauer DE. An Stelle der individuellen Ruhezeitspannen DR1 - DR3 können auch maximale Zeitspannen zum Antworten angegeben werden, die sich aus der Summe der jeweiligen Ruhezeitspanne DR1 - DR3 und der Zeitspanne zum Abgeben der Bestätigungsdaten ACD ergeben. Gemäß der Figur 3 erkennen alle drei ESL 2 - 4, dass sie synchron sind, weil das erste Zeitschlitzsymbol Z1 den für sie bestimmten Zeitschlitz anzeigt (niederwertigstes Byte B0 der Hardware-Adresse ist bei allen drei ESL 2 - 4 Hex 00). Die Prüfung der Adressdaten AD zeigt an, dass jedes ESL 2 - 4 individuell andressiert ist (Existenz der verbleibenden drei Bytes B1 - B3 der jeweiligen Hardware-Adresse in den Adressdaten AD), es werden die für das jeweilige ESL 2 - 4 bestimmten Befehle dekodiert und unmittelbar ausgeführt, sowie die individuellen Bestätigungsdaten ACD nach Ablauf der individuellen Ruhezeitspannen DR1 ... DR3 nach dem Ende der Empfangszeitdauer DE an das zweite Funkmodul 22 übermittelt, das während einer Stations-Empfangszeitdauer SDE zum Empfang der Bestätigungsdaten ACD bereit ist. Die vollständige Abarbeitung der Einfach-Zeitschlitzbefehle inklusive der Kommunikation der Bestätigungsdaten ACD erfolgt in einem ersten Teil 36 des Zeitschlitzes Z1, so dass ein zweiter Teil 37 für andere Aufgabe, wie z.B. die Abarbeitung von Mehrfach- Zeitschlitzbefehlen zur Verfügung steht, worauf nachfolgend im Detail noch eingegangen ist.

In Analogie zu der Figur 2 zeigt auch die in der Fig. 3 abgebildete letzte (unterste) Zustandsfolge das Steuersignal FS im Wechsel zwischen dem ersten Pegel P1 und dem zweiten Pegel P2. Im vorliegenden Fall ist jedoch die Dauer einer ersten Stummschaltzeitspanne SSD1 länger als die Dauer einer zweiten Stummschaltzeitspanne SSD2, weil im Bereich der ersten Stummschaltzeitspanne SSD1 eine längere störungsfreie Kommunikationsphase nötig ist. Die Dauer der zweiten Stummschaltzeitspanne SSD2 entspricht jener in der Figur 2 dargestellten Dauer, weil nur die Empfangszeitdauer DE zu berücksichtigen ist.

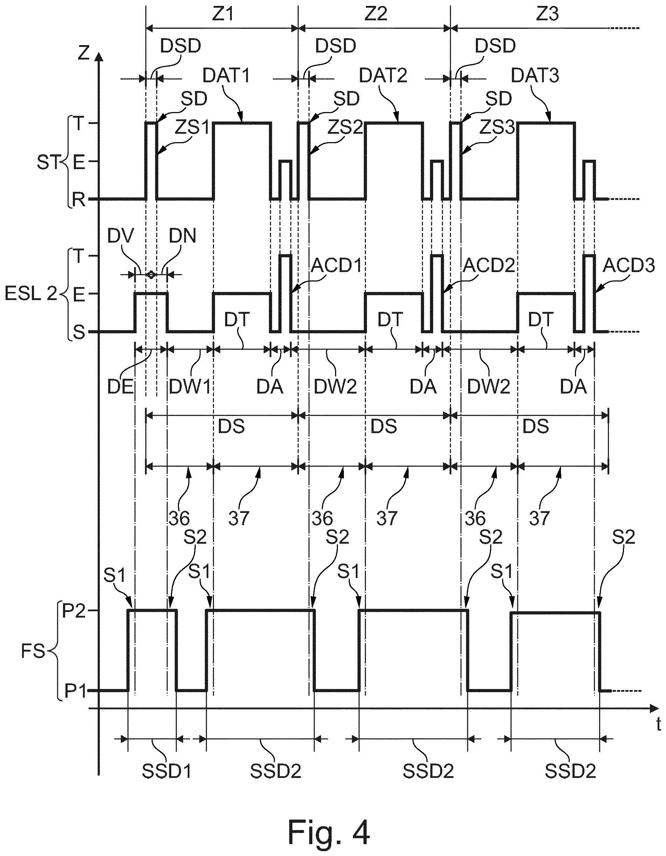

In der Figur 4 ist die Abarbeitung eines Mehrfach-Zeitschlitzbefehls dargestellt, bei der das erste ESL 2 über drei benachbarte Zeitschlitze Z1 - Z3 hinweg Gesamtdaten (z.B. betreffend ein gesamtes darzustellendes Bild oder auch nur eine Bildebene des Bildes) zerlegt in drei Datenpakete DAT1 - DAT3 von dem zweiten Funkmodul 22 empfängt. Das erste ESL 2 erkennt mit Hilfe des Synchronisations-Datensignals SD seinen synchronen Zustand und, dass es individuell adressiert ist (Adressaten Hex B2:00:01), empfängt und dekodiert einen "DATA_INIT"-Befehl, mit dem ihm das Empfangen der drei Datenpakete DAT1 - DAT3 in besagten Zeitschlitzen Z1 - Z3 befohlen wird, und geht am Ende der Empfangsdauer DE für eine erste Wartedauer DW1 in den Schlaf-Zustand S, wobei die erste Wartedauer DW1 mit Ende der ersten Hälfte der Zeitschlitzdauer DS abläuft. Zu Beginn des zweiten Teils 37 des ersten Zeitschlitzes Z1 geht das zweite Funkmodul 22 in seinen Sendezustand T und das erste ESL 2 in seinen empfangsbereiten Aktiv-Zustand E, sodass es während einer Datenübertragungsdauer DT das erste Datenpaket DAT1 empfängt. Danach bestätigt es mit Hilfe von Teil-Bestätigungsdaten ACD1 während einer Bestätigungszeitdauer DA, während der auch das zweite Funkmodul 22 im Empfangszustand E ist, den erfolgreichen Empfang. Die Bestätigungszeitdauer DA endet vor dem Ende des ersten Zeitschlitzes Z1. Nach Ablauf der Bestätigungszeitdauer DA verweilt das erste ESL 2 für eine zweite Wartedauer DW2, die bis zum Ende des ersten Teils 36 des zweiten (nachfolgenden) Zeitschlitzes Z2 reicht, im Schlaf-Zustand S. Zu Beginn des zweiten Teils 37 des zweiten Zeitschlitzes Z2 geht das zweite Funkmodul 22 in seinen Sendezustand T und das erste ESL 2 in seinen empfangsbereiten Aktiv-Zustand E, sodass es während einer Datenübertragungsdauer DT das zweite Datenpaket DAT2 empfängt. Gleiches gilt für den dritten Zeitschlitz Z3, mit dessen Ende die Datenübertragung beendet ist. Jedes erfolgreich übermittelte Datenpaket DAT1 - DAT3 wird mit Hilfe der Teil-Bestätigungsdaten ACD1 - ACD3 bestätigt.

In Analogie zu der Figur 2 zeigt auch die in der Fig. 4 abgebildete letzte (unterste) Zustandsfolge das Steuersignal FS im Wechsel zwischen dem ersten Pegel P1 und dem zweiten Pegel P2. Im vorliegenden Fall ist jedoch die Dauer einer ersten Stummschaltzeitspanne SSD1 kürzer als die Dauer einer zweiten Stummschaltzeitspanne SSD2, die im vorliegen Fall mehrfach hintereinander auftritt. Die Dauer der ersten Stummschaltzeitspanne SSD1 entspricht jener in der Figur 2 dargestellten Dauer, die für einen störungsfreien Empfang des Synchronisations-Datensignals SD günstig ist. Während der zweiten Stummschaltzeitspanne SSD2 wird für einen störungsfreien Funkverkehr zum Abwickeln von mehren, knapp nacheinander auftretenden Kommunikationsereignissen gesorgt.

Ganz allgemein sei abschließend erwähnt, dass in Bezug auf Zeitschlitze, zu denen keine elektronischen Preisschilder zugeordnet sind, bevorzugt keine Stummschaltung der beiden anderen Funkmodule 21, 23 durchgeführt wird. Damit wird die Kommunikationseffizienz des gesamten Funknetzes verbessert wird.

Gemäß einem anderen Ausführungsbeispiel der Erfindung kann auch eine vordefinierte, abgestufte Hierarchie für die Funkaktivitäten der Funkmodule vorgesehen sein. Dabei kann z.B. ein erstes Funkmodul höchste Priorität, ein zweites Funkmodul niedrigere Priorität und ggf. ein drittes Funkmodul die niedrigste Priorität aufweisen. In diesem Ausführungsbeispiel kann das zweite Funkmodul nur das dritte Funkmodul hinsichtlich seiner Funkaktivität beeinflussen, wohingegen das erste Funkmodul die beiden anderen Funkmodule hinsichtlich ihrer Funkaktivitäten beeinflussen kann. Das dritte Funkmodul kann keine Beeinflussung der Funkaktivität der anderen Funkmodule vornehmen.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, solange der durch die Ansprüche definierte Bereich der Erfindung nicht verlassen wird. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können, solange der durch die Ansprüche definierte Bereich der Erfindung nicht verlassen wird.

## Patentansprüche

1. Funk-Basisstation (17), aufweisend
- ein erstes Funkmodul (21, 23) zur Funk-Kommunikation mit ihm zugeordneten ersten Funk-Kommunikationsgeräten (11, 16), und
- ein zweites Funkmodul (22) zur Funk-Kommunikation mit ihm zugeordneten zweiten Funk-Kommunikationsgeräten (2 - 10), wobei
die beiden Funkmodule (21, 22, 23) eine Kopplung (24) miteinander aufweisen, und
- das zweite Funkmodul (22) mit Hilfe der Kopplung (24) zum Beeinflussen der Funkaktivität des ersten Funkmoduls (21, 23) ausgebildet ist und
- das erste Funkmodul (21, 23) hinsichtlich seiner Funkaktivität beeinflussbar ausgebildet ist,
- wobei das zweite Funkmodul (22) zum Kommunizieren mit elektronischen Preisanzeigeschildern als die ihm zugeordneten zweiten Funk-Kommunikationsgeräte (2 - 10) ausgebildet ist, und
- wobei bei der Kommunikation des zweiten Funkmoduls (22) mit den elektronischen Preisanzeigeschildern (2 - 10) ein Zeitschlitzkommunikationsverfahren zur Anwendung kommt, bei dem in sich wiederholender Folge eine Anzahl von Zeitschlitzen (Z1 - ZN) mit identischer Zeitschlitzdauer (DS) pro Zeitschlitzzyklus zur Kommunikation bereitstehen, wobei jeder Zeitschlitz (Z1 - ZN) durch ein eindeutiges Zeitschlitzsymbol (ZS1 - ZSN) gekennzeichnet ist, und
wobei das zweite Funkmodul (22) immer zu Beginn jeder Zeitschlitzdauer (DS) ein Synchronisationsdatensignal (SD) aufweisend das jeweilige Zeitschlitzsymbol (ZS1 - ZSN) sendet, damit das dem betreffenden Zeitschlitz (Z1 - ZN) zugeordnete Preisanzeigeschild das Zeitschlitzsymbol (ZS1 - ZSN) während einer Empfangszeitdauer (DE), während der das zugeordnete Preisanzeigeschild seinen Schlafzustand (S) verlassen hat und sich in seinem empfangsbereiten Aktivzustand (E) befindet, zum Feststellen seines synchronen Zustands empfangen kann,
- wobei die Funkaktivität des ersten Funkmoduls (21, 23) immer dann mittels der Kopplung derart beeinflusst wird, dass während einer Stummschaltzeitspanne (SSD), während der das Synchronisationsdatensignal (SD) auftritt, das erste Funkmodul (21, 23) stummgeschaltet ist, wobei die Stummschaltzeitspanne (SSD) mit einer Vorlaufzeit (S1) und einer Nachlaufzeit (S2) die Empfangszeitdauer (DE) überlappt.

2. Funk-Basisstation (17) nach Anspruch 1, wobei das zweite Funkmodul (22) zum Generieren und Abgeben eines Funkaktivität-Steuersignals (FS) an das erste Funkmodul (21, 23) und das erste Funkmodul (21, 23) zum Empfangen und Auswerten des Funkaktivität-Steuersignals (FS) hinsichtlich seines Informationsgehalts und zum Beeinflussen seiner Funkaktivität gemäß dem Informationsgehalt ausgebildet ist.

3. Funk-Basisstation (17) nach einem der vorangehenden Ansprüche, wobei die Kopplung (24) durch eine Leitung oder ein Leitungssystem zwischen den beiden Funkmodulen (21, 22, 23) realisiert ist

4. Funk-Basisstation (17) nach einem der vorangehenden Ansprüche, wobei das hinsichtlich seiner Funkaktivität beeinflussbare erste Funkmodul (21, 23) derart ausgebildet ist, dass es entsprechend der Beeinflussung durch das zweite Funkmodul (22):
- seine Funkaktivität aussetzt, und/oder
- seine Funkaktivität wieder aufnimmt, und/oder
- seine Funkaktivität während einer vordefinierten Zeitspanne oder gemäß einer durch das zweite Funkmodul (22) definierten Zeitspanne aussetzt, und/oder
- seine Sendeleistung automatisch auf einen vordefinierten Wert einstellt oder an einen durch das zweite Funkmodul (22) definierten Wert anpasst, und/oder
- seine Funkkanalbelegung gemäß einem vordefinierten Schema oder gemäß einem durch das zweite Funkmodul (22) definierten Schema anpasst.

5. Funk-Basisstation (17) nach einem der vorangehenden Ansprüche, wobei das hinsichtlich seiner Funkaktivität beeinflussbare erste Funkmodul (21, 23) zum Kommunizieren gemäß einem WLAN-Standard mit WLAN-fähigen Funk-Kommunikationsgeräten (11, 16) oder zum Kommunizieren mit elektronischen Preisanzeigeschildern als Funk-Kommunikationsgeräte ausgebildet ist.

6. Funk-Basisstation (17) nach einem der vorangehenden Ansprüche, wobei das zum Beeinflussen ausgebildete zweite Funkmodul (22) zum vorausschauenden Bestimmen des Zeitpunkts der Beeinflussung ausgebildet ist.

7. Funk-Basisstation (17) nach Anspruch 6, wobei der Zeitpunkt der Beeinflussung auf Grundlage des erwarteten Zeitpunkts einer Kommunikation zwischen einem Funk-Kommunikationsgerät (2 - 10) und dem zum Beeinflussen ausgebildeten zweiten Funkmodul (22) festgelegt wird.

8. Funk-Basisstation (17) nach einem der vorangehenden Ansprüche, die einen Host-Computer (20) aufweist, der mit Hilfe eines kabelgebundenen Computernetzwerks (19) mit einem Server (18) koppelbar ist und zum Austauschen von Daten zwischen dem Server (18) und den Funkmodulen (21 - 23) ausgebildet ist, wobei der Host-Computer (20) ausgebildet ist:
- zum Übertragen von Daten
+ zwischen dem Server (18) und dem Host-Computer (20) mit Hilfe eines Netzwerk-Protokolls, insbesondere TCP/IP-Protokolls, und
+ zwischen den Funkmodulen (21 - 23) und dem Host-Computer (20) mit Hilfe eines Schnittstellen-Protokolls, insbesondere eines seriellen Schnittstellen-Protokolls, und
- zum Tunneln eines Rohdatenverkehrs zwischen den Funkmodulen (21 - 23) und dem Server (18).

9. System (1), aufweisend
- eine Funk-Basisstation (21 - 23) nach einem der vorangehenden Ansprüche 1 - 8, und
- einem mit der Funk-Basisstation (17) gekoppelten Server (18) zur Bereitstellung oder Verarbeitung von Daten betreffend die Kommunikation mit den Funk-Kommunikationsgeräten (21 - 23).

10. System (1) nach Anspruch 9, wobei
- der Server (1) zum Bereitstellen einer virtuellen Instanz (34; 35, 36) einer Funk-Basisstation ausgebildet ist, und
- die Funk-Basisstation (17) zum Tunneln eines Rohdatenverkehrs (RD) zwischen den Funkmodulen (21 - 23) und der virtuellen Instanz (34; 35, 36) der Funk-Basisstation ausgebildet ist.

## Claims

1. A radio base station (17) comprising
- a first radio module (21, 23) for radio communication with first radio communication devices (11, 16) assigned thereto, and
- a second radio module (22) for radio communication with second radio communication devices (2 - 10) assigned thereto, wherein
the two radio modules (21, 22, 23) have a coupling (24) with each other,
- the second radio module (22) with the aid of the coupling (24) is configured to influence the radio activity of the first radio module (21, 23), and
- the first radio module (21, 23) is designed to be influenced in terms of its radio activity,
- wherein the second radio module (22) is configured to communicate with electronic price indication signs as the second radio communication devices (2 - 10) assigned thereto, and
- wherein during the communication of the second radio module (22) with the electronic price indication signs (2 - 10) a time slot communication method is used in which in a repeating sequence a number of time slots (Z1 - ZN) of identical time slot duration (DS) per time slot cycle are available for communication, wherein each time slot (Z1 - ZN) is **characterised by** a distinct time slot symbol (ZS1 - ZSN), and
wherein the second radio module (22) always at the start of every time slot duration (DS) sends a synchronisation data signal (SD) having the respective time slot symbol (ZS1 - ZSN) so that the price indication sign assigned to the respective time slot (Z1 - ZN) can, during a receiving duration (DE), during which the assigned price indication sign has left its sleep state (S) and is in the ready to receive active state (E), receive the time slot signal (ZS1 - ZSN) to determine its synchronous state,
- wherein the radio activity of the first radio module (21, 23) is always influenced by way of the coupling in such a way that during a mute time span (SSD), during which the synchronisation data signal (SD) appears, the first radio module (21, 23) is muted, wherein the mute time span (SSD) overlaps the receiving time duration (DE) with a lead time (S1) and a lag time (S2).

2. The radio base station (17) according to claim 1, wherein the second radio module (22) is configured to generate and emit a radio activity control signal (FS) to the first radio module (21, 23) and the first radio module (21, 23) is configured to receive and evaluate the radio activity control signal (FS) in terms of its information content and to influence its radio activity in accordance with this information content.

3. The radio base station (17) according to any one of the preceding claims, wherein the coupling (24) is formed by a lead or lead system between the two radio modules (21, 22, 23).

4. The radio base station (17) according to any one of the preceding claims, wherein the radio module (21, 23) which can be influenced in term of its radio activity, is designed in such a way that in accordance with its influencing by the second radio module (22):
- it stops its radio activity, and/or
- resumes its radio activity, and/or
- suspends its radio activity for a predetermined time span or in accordance with a time span defined by the second radio module (22), and/or
- automatically sets its emitting output to a predefined value or adjusts it to a value defined by the second radio module (22), and/or
- adapts its radio channel occupancy in accordance with a predefined plan or a plan defined by the second radio module (22).

5. The radio base station (17) according to any one of the preceding claims, wherein the first radio module (21, 23) which can be influenced in terms of its radio activity is configured to communicate in accordance with a WLAN standard with WLAN-capable radio communication device (11, 16) or to communicate with electronic price indication signs as radio communication devices.

6. The radio base station (17) according to any one of the preceding claims, wherein the second radio module (22) configured to exert influence is designed to determine the time of influencing in an anticipatory manner.

7. The radio base station (17) according to claim 6, wherein the time of influencing is determined on the basis of the anticipated time of communication between a radio communication device (2 - 10) and the second radio module (22) designed for influencing.

8. The radio base station (17) according to any one of the preceding claims, which comprises a host computer (20), which by means of a wired computer network (19) can be connected to a server (18) and is configured to exchange data between the server (18) and the radio module (21 - 23), wherein the host computer (20) is designed:
- to transfer data
+ between the server (18) and the host computer (20) by way of a network protocol, in particular a TCP/IP protocol, and
+ between the radio modules (21- 23) and the host computer (20) by way of an interface protocol, in particular a serial interface protocol, and
- to tunnel raw data traffic between the radio modules (21 - 23) and the server (18).

9. A system (1) comprising
- a radio base station (21 -23) according to any one of the preceding claims 1 - 8, and
- a server (18) connected to the radio base station (17) for providing or processing data relating to the communication with radio communication devices (21 - 23).

10. The system (1) according to claim 9, wherein
- the server (1) is configured to provide a virtual instance (34; 35, 36) of a radio base station, and
- the radio base station (17) is designed to tunnel raw data traffic (RD) between the radio modules (21 - 23) and the virtual instance (34; 35, 36) of the radio base station.

## Revendications

1. Station de base radio (17), présentant
- un premier module radio (21, 23) pour la radiocommunication de premiers appareils de radiocommunication (11, 16) qui lui sont associés, et
- un second module radio (22) pour la radiocommunication de seconds appareils de radiocommunication (2-10) qui lui sont associés, dans lequel
les deux modules radio (21, 22,23) présentent un accouplement mutuel (24), et
- le second module radio (22) est conçu à l'aide de l'accouplement mutuel (24) pour influer sur l'activité radio du premier module radio (21, 23) et
- le premier module radio (21, 23) est conçu de manière à être influençable en ce qui concerne son activité radio, et
- le second module radio (22) est conçu pour communiquer avec des panneaux électroniques d'indication de prix sous forme des seconds appareils de radiocommunication (2-10) qui lui sont associés, et dans lequel,
- lors de la communication du second module radio (22) avec les panneaux électroniques d'indication de prix (2-10), on utilise un procédé de communication à créneaux temporels dans lequel, en succession récurrente, un certain nombre de créneaux temporels (Z1-ZN) ayant une durée identique de créneau temporel (DS) par cycle de créneaux temporels sont à disposition pour la communication, chaque créneau temporel (Z1-ZN) étant **caractérisé par** un signal univoque de créneau temporel (ZS1-ZSN), et
le second module radio (22) envoie toujours, au début de chaque durée de créneau temporel (DS), un signal de données de synchronisation (SD) présentant le symbole respectif de créneau temporel (ZS1-ZSN) pour que le panneau d'indication de prix (ZS1-ZSN) associé au créneau temporel concerné (Z1-ZN), pendant une durée de réception (DE) au cours de laquelle le panneau d'indication de prix associé a quitté son état de veille (S) et se trouve dans son état actif prêt à la réception (E), puisse le recevoir pour constater son état synchrone,
- l'activité radio du premier module radio (21, 23) est ensuite toujours influencée au moyen de l'accouplement de manière à ce que, pendant un laps de temps en mode muet (SSD), au cours duquel le signal de données de synchronisation (SD) arrive, le premier module radio (21, 23) soit mis en mode muet, le laps de temps en mode muet (SSD) recouvrant la durée de réception (DE) avec un délai préalable (S1) et un délai de poursuite (S2) .

2. Station de base radio (17) selon la revendication 1, dans laquelle le second module radio (22) est conçu pour générer et émettre un signal de commande d'activité radio (FS) vers le premier module radio (21, 23) et le premier module radio (21, 23) pour recevoir et exploiter le signal de commande d'activité radio (FS) en ce qui concerne son contenu en information et pour influencer son activité radio en fonction de ce contenu en information.

3. Station de base radio (17) selon une des revendications précédentes, dans laquelle l'accouplement (24) est réalisé par un câble ou par un système de câble entre les deux modules radio (21, 22, 23).

4. Station de base radio (17) selon une des revendications précédentes, dans laquelle le premier module radio (21, 23) influençable ce qui concerne son activité radio est réalisé de manière à, en fonction de l'influence exercée par le second module radio (22) :
- interrompre son activité radio, et/ou
- reprendre son activité radio, et/ou
- interrompre son activité radio pendant un laps de temps prédéfini ou suivant un laps de temps défini par le second module radio (22), et/ou
- régler sa puissance d'émission automatiquement à une valeur prédéfinie ou l'adapter à une valeur définie par le second module radio (22), et/ou
- adapter l'occupation du canal radio suivant un schéma prédéfini ou suivant un schéma défini par le second module radio (22).

5. Station de base radio (17) selon une des revendications précédentes, dans laquelle le premier module radio (21, 23) influençable en ce qui concerne son activité radio est conçu pour communiquer suivant une norme WLAN avec des appareils de radiocommunication (11, 16) compatibles avec le WLAN ou pour communiquer avec des panneaux électroniques d'affichage de prix sous forme d'appareils de radiocommunication.

6. Station de base radio (17) selon une des revendications précédentes, dans laquelle le second module radio (22) conçu pour influer est conçu pour une définition prévisionnelle du moment d'exercice de l'influence.

7. Station de base radio (17) selon la revendication 6, dans laquelle le moment d'exercice de l'influence est établi sur la base du moment attendu d'une communication entre l'appareil de radiocommunication (2-10) et le second module radio (22) conçu pour influer.

8. Station de base radio (17) selon une des revendications précédentes, qui présente un ordinateur hôte (20) qui peut être accouplé au moyen d'un réseau informatique à liaison câblée (19) à un serveur (18) et est conçu pour échanger des données entre le serveur (18) et les modules radio (21-23), l'ordinateur hôte (20) étant conçu pour :
- transférer des données
+ entre le serveur (18) et l'ordinateur hôte (20) à l'aide d'un protocole de réseau, en particulier d'un protocole TCP/IP, et
+ entre les modules radio (21-23) et l'ordinateur hôte (20) à l'aide d'un protocole d'interface, en particulier d'un protocole d'interface sériel, et
- canaliser un trafic de données brutes entre les modules radio (21-23) et le serveur (18).

9. Système (1), présentant
- une station de base radio (21-23) selon une des revendications précédentes 1 à 8, et
- un serveur (18) accouplé à la station de base radio (17) pour la mise à disposition ou le traitement de données concernant la communication avec les appareils de radiocommunication (21-23).

10. Système (1) selon la revendication 9, dans lequel
- le serveur (1) est conçu pour mettre à disposition une instance virtuelle (34 ; 35, 36) d'une station de base radio, et
- la station de base radio (17) est conçue pour canaliser le trafic de données brutes (RD) entre les modules radio (21-23) et l'instance virtuelle (34 ; 35, 36) de la station de base radio.
